# EUROPEAN PATENT APPLICATION

(11) **EP 1 927 284 A1**
(43) Date of publication of application: **04.06.2008**
(21) Application number: 06024794.7
(22) Date of filing: 30.11.2006
(51) Int. Cl.: A01K 87/00

(54) **Fishing rod and method for making the same**

(71) Applicant: Hong, Eugene, Taichung (TW)
(72) Inventor: Hong, Eugene, Taichung (TW)
(74) Representative: Herden, Andreas F.

(57) **Abstract**

A fishing rod includes at least one rod section (10), which includes a peripheral surface (11), and a 5 positioning area (12) formed on the peripheral surface (11) and adapted to be sleeved by a guide ring (20). The positioning area (12) includes a plurality of spaced-apart protrusions (121) projecting from the peripheral surface (11) and adapted to prevent the guide 10 ring (20) from slipping rotatingly on the positioning area (12).

## Description

The invention relates to a fishing rod, more particularly to a fishing rod having an anti- slipping function. The invention also relates to a method for making the fishing rod.

A conventional fishing rod usually includes a plurality of rod sections connected to each other in sequence, and a plurality of guide rings sleeved on the rod sections correspondingly. Each of the rod sections is made by roughening a rod body and applying a painting material on the roughened rod body. Since each of the rod sections has a circular periphery, the guide rings are liable to slip rotatingly on the rod sections, which may cause a -fishing line to tangle around the rod sections and/or the guide rings.

Therefore, the object of the present invention is to provide a fishing rod having an anti-slipping function.

According to a first aspect of this invention, a fishing rod includes at least one rod section, which includes a peripheral surface, and a positioning area formed on the peripheral surface and adapted to be sleeved by a guide ring. The positioning area includes a plurality of spaced-apart protrusions projecting from the peripheral surface and adapted to prevent the guide ring from slipping rotatingly on the positioning area.

According to a second aspect of this invention, a method for making a fishing rod includes the steps of: a) printing a plurality of spaced-apart protrusions on a peripheral surface of a rod section to form a positioning area; and b) heat-curing the protrusions.

Other features and advantages of the present invention will become apparent in the following detailed description of the preferred embodiments with reference to the accompanying drawings, of which:
Figure 1 is a fragmentary partly sectional view of a first preferred embodiment of a fishing rod according to this invention;
Figure 2 shows the first preferred embodiment sleeved by a guide ring;
Figure 3 is a fragmentary sectional view of the first preferred embodiment taken along line 3-3 in Figure 2;
Figure 4 is a flowchart of a method for making the first preferred embodiment;
Figure 5 is a fragmentary partly sectional view of a second preferred embodiment of a fishing rod according to this invention; and
Figure 6 is a flowchart of a method for making the second preferred embodiment.

Before the present invention is described in greater detail, it should be noted that like elements are denoted by the same reference numerals throughout the disclosure.

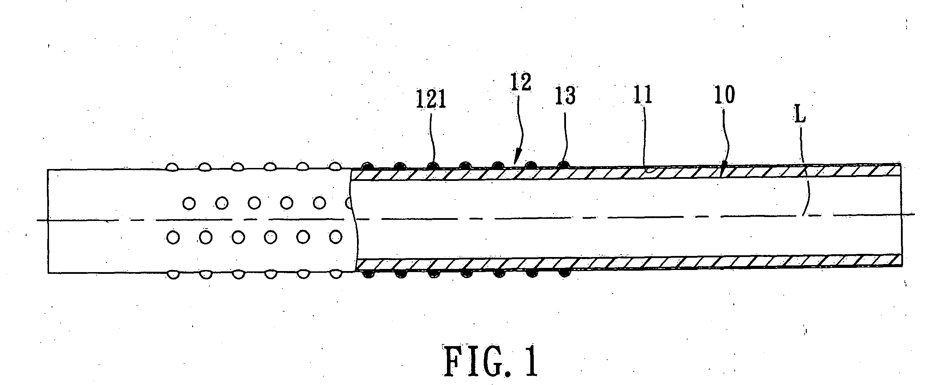

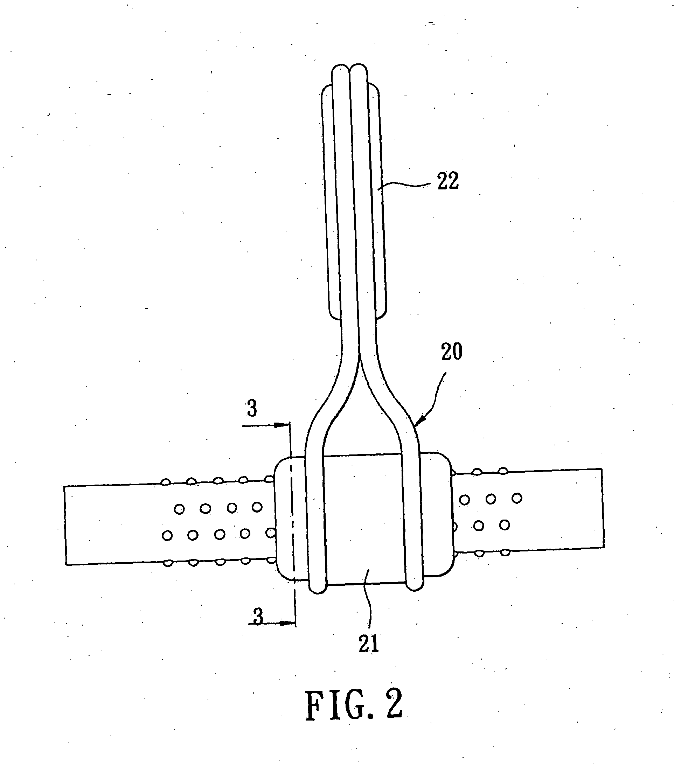

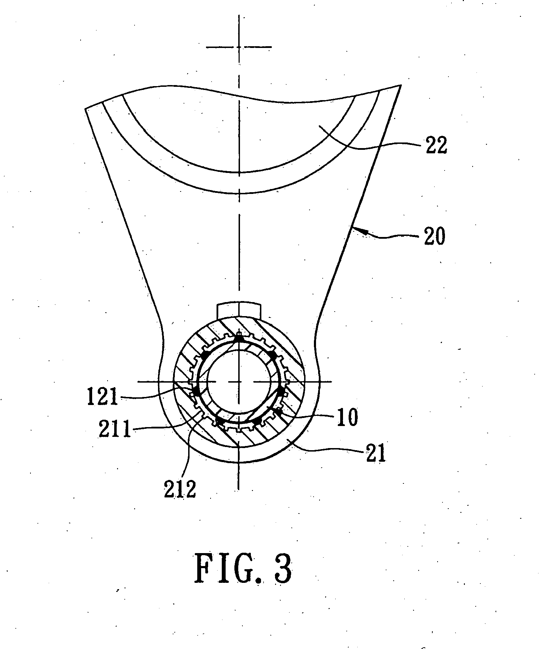

Referring to Figures 1, 2, and 3, the first preferred embodiment of a fishing rod according to this invention is shown to include a plurality of rod sections 10 connected to each other in sequence. It should be noted that only one of the rod sections 10 is shown in the 5 figures. Each of the rod sections 10 is sleeved by at least one guide ring 20. The guide ring 20 includes a sleeving portion 21 sleeved on a corresponding one of the rod sections 10, and a guide portion 22 mounted on and extending radially from the sleeving portion 21. The sleeving portion 21 includes an inner annular surface 211 and a plurality of spaced-apart anchoring recesses 212 recessed from the inner annular surface 211.

Each of the rod sections 10 includes a peripheral surface 11 surrounding an axis (L), a positioning area 12 formed on the peripheral surface 11 and adapted to be sleeved by the guide ring 20, and a coating layer 13, such as a paint layer, applied on the peripheral surface 11 and the positioning area 12. The positioning area 12 includes a plurality of spaced-apart protrusions 121 projecting from the peripheral surface 11 and adapted to prevent the guide ring 20 from slipping rotatingly on the positioning area 12. The protrusions 121 are formed by transfer printing an ink material on the peripheral surface 11. The protrusions 121 are spaced apart longitudinally and angularly. Preferably, each of the protrusions 121 is in a semi-peripheral shape, and has a thickness ranging from 0.15 mm to 0.30mm and a diameter ranging from 0.5 mm to 1.0 mm. In this preferred embodiment, the coating layer 13 is applied on the protrusions 121.

When the guide ring 20 is sleeved on the positioning area 12 of the corresponding one of the rod sections 10, the protrusions 121 of the positioning area 12 are anchored in the anchoring recesses 212 of the sleeving portion 21 of the guide ring 20 so as to prevent the guide ring 20 from slipping rotatinglyon the positioning area 12.

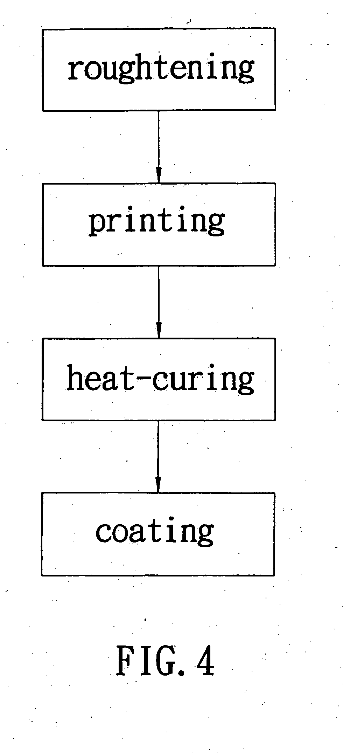

Referring to Figure 4, a method for making the first preferred embodiment of the fishing rod according to this invention includes the steps of:
1) roughening:
   An area of the peripheral surface 11 of each of the rod sections 10 to be formed with the positioning area 12 is roughened.
2) printing:
   A plurality of the spaced-apart protrusions 121 is formed on the roughened area of the peripheral surface 11 of each of the rod sections 10 by transfer printing to form the positioning area 12.
3) heat - curing:
   The protrusions 121 are heat-cured at a temperature ranging from 65 to 85°C.
4) coating:
   The coating layer 13 is applied on the peripheral surface 11 of each of the rod sections 10 and the protrusions 121.

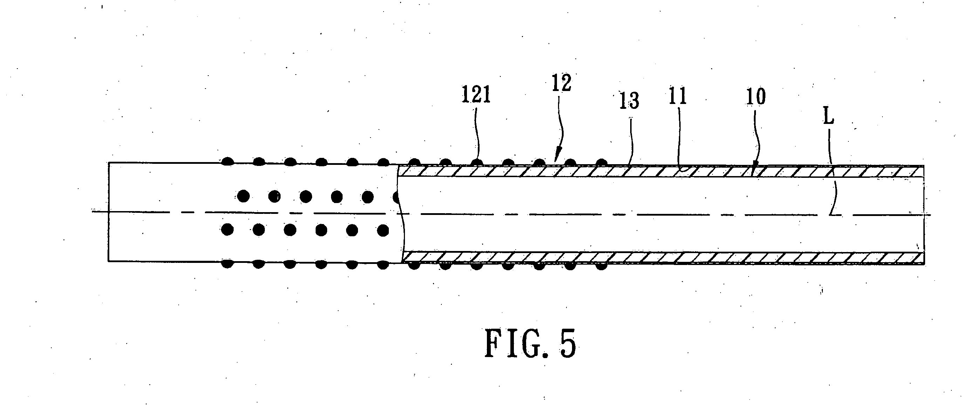

Referring to Figure 5, the second preferred embodiment of a'fishing rod according to this invention is shown to be similar to the first preferred embodiment, except that the coating layer 13 is applied between the peripheral surface 11 and the protrusions 121.

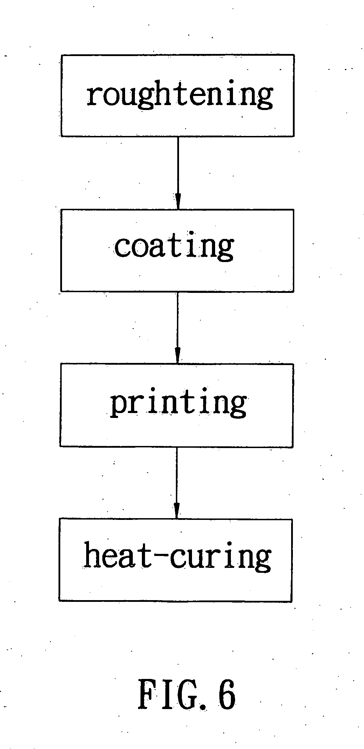

Referring to Figure 6, a method for making the second preferred embodiment of the fishing rod according to 10 this invention is shown to be similar to the method of Figure 4, except that the coating layer 13 is applied on the peripheral surface 11 of each of the rod sections 10 between the roughening step and the printing step.

## Claims

1. A fishing rod **characterized by**:
at least one rod section (10) including a peripheral surface (11), and a positioning area (12-) formed on said 5 peripheral surface (11) and adapted to be sleeved by a guide ring (20), said positioning area (12) including a plurality of spaced-apart protrusions (121) projecting from said peripheral surf ace (11) and adapted to prevent the guide ring (20) from slipping rotatingly on said positioning area (12).

2. The fishing rod as claimed in Claim 1, **characterized**
**in that** said protrusions (121) are spaced apart longitudinally.

3. The fishing rod as claimed in Claim 2, **characterized**
**in that** said protrusions (121) are spaced apart angularly.

4. The fishing rod as claimed in Claim 1, **characterized**
**in that** each of said protrusions (121) is in a semi - spherical shape.

5. The fishing rod as claimed in Claim 1, further
**characterized by** a coating layer (13) applied on said protrusions (121).

6. The fishing rod as claimed in Claim 1, further
**characterized by** a coating layer (13) applied between said peripheral surf ace (11) and said protrusions (121).

7. The fishing rod as claimed in Claim 1, **characterized**
**in that** said protrusions (121) are made of an ink material.

8. The fishing rod as claimed in Claim 1, **characterized**
**in that** each of said protrusions (121) has a thickness ranging from 0.15 mm to 0.30mm and a diameter ranging from 0.5 mm to 1.0 mm.

9. A method for making a fishing rod, **characterized by** the steps of:
a) printing a plurality of spaced-apart protrusions (121) on a peripheral surface (11) of a rod section (10) to form a positioning area (12); and
b) heat-curing the protrusions (121).

10. The method as claimed in Claim 9, further
**characterized by** a step of roughening the peripheral surface (11) of the rod section (10) to form the positioning area (12) prior to step a).

11. The method as claimed in Claim 10, further
**characterized by** a step of applying a coating layer (13) on
the peripheral surface (11) of the rod section (10) and the protrusions (121) after step b).

12. The method as claimed in Claim 10, further
**characterized by** a step of applying a coating layer (13) on the peripheral surface (11) of the rod section (10) between the roughening step and the step a).
